# EUROPÄISCHE PATENTSCHRIFT

(11) **EP 1 728 003 B1**
(45) Veröffentlichungstag und Bekanntmachung des Hinweises auf die Patenterteilung: **20.02.2008**
(21) Anmeldenummer: 05716905.4
(22) Anmeldetag: 04.03.2005
(51) Int. Cl.: F16D 65/14, B60T 13/04

(54) **FEDERBETÄTIGTE FESTSTELL-BREMSVORRICHTUNG**
SPRING-ACTUATED PARKING BRAKE DEVICE
SYSTEME DE FREIN DE STATIONNEMENT ACTIONNE PAR RESSORT

(30) Priorität: 17.03.2004 DE 102004012939
(43) Veröffentlichungstag der Anmeldung: 06.12.2006
(73) Patentinhaber: ROBERT BOSCH GMBH, 70442 Stuttgart (DE)
(72) Erfinder: KASPER, Christoph, 87527 Sonthofen (DE); GUGGENMOS, Harald, 87509 Immenstadt/Seifen (DE)
(86) Internationale Anmeldenummer: PCT/EP2005/050962
(87) Internationale Veröffentlichungsnummer: WO 2005/090820

(56) Entgegenhaltungen:
- WO-A-02/49897
- US-A- 3 182 566
- US-A- 4 014 414
- US-A- 4 472 995

## Beschreibung

### Stand der Technik

Die vorliegende Erfindung betrifft eine Feststell-Bremsvorrichtung mit einer Betätigungseinheit und einer Übertragungseinheit zur Übertragung einer Betätigungskraft der Betätigungseinheit auf eine Bremseinrichtung.

Feststll-Bremsvorrichtungen sind aus dem Stand der Technik bekannt sehe z.B. WO-A-02/49897. Beispielsweise sind manuelle Feststell-Bremsvorrichtungen umfassend einen Seilzug als Betätigungseinheit bekannt, wobei eine Betätigungskraft des Seilzuges über eine Übertragungseinrichtung, wie z.B. einen Spindeltrieb, auf die Feststellbremse wirkt. Ferner sind automatische Parkbremsen bekannt, welche anstelle des Seilzuges eine automatisierte Betätigungseinheit aufweise, welche insbesondere mittels Hydraulik arbeiten. Weiterhin sind Feststell-Bremsvorrichtungen bekannt, bei denen eine Feststellung bzw. ein Lösen der Bremse mittels elektrischer Antriebe erfolgt. Die bekannten Feststell-Bremsvorrichtungen sind jedoch relativ aufwendig und teuer in der Herstellung und benötigen eine Vielzahl von Antriebs- und Steuerungsbauteilen.

### Vorteile der Erfindung

Die erfindungsgemäße Feststell-Bremsvorrichtung mit den Merkmalen des Patentanspruchs 1 weist demgegenüber den Vorteil auf, dass sie einen einfachen Aufbau aufweist und besonders kostengünstig bereitgestellt werden kann. Da es sich bei Feststell-Bremsvorrichtungen um Massenbauteile handelt, können hohe Einsparpotentiale realisiert werden. Die erfindungsgemäße Feststell-Bremsvorrichtung verwendet zum Feststellen der Feststellbremse als Betätigungskraft eine Federkraft. Die Federkraft kann mittels eines einfach aufgebauten Federelements, wie z.B. einer Tellerfeder, bereitgestellt werden. Somit können aufwendige Zusatzbauteile für die Betätigungseinrichtung der Feststellbremse entfallen.

Die Unteransprüche zeigen bevorzugte Weiterbildungen der Erfindung.

Um eine sichere Übertragung der Betätigungskraft zu ermöglichen, ist zwischen dem Federelement und der Übertragungseinheit ein Federkolben angeordnet. Dabei wirkt die Federkraft des Federelements über den Federkolben auf die Übertragungseinheit.

Ein Verriegelungselement ist vorgesehen, um den Federkolben und/oder das Federelement zu verriegeln bzw. freizugeben. Dadurch kann eine einfach aufgebaute betriebssichere Feststellbremse ermöglicht werden.

Das Verriegelungselement ist mittels eines elektromagnetischen oder elektrischen Aktuators zwischen einer erste Position, in welcher der Federkolben verriegelt ist, und einer zweiten Position, in welcher der Federkolben freigegeben ist, verstellbar.

Um einen besonders kostengünstigen und einfachen Aufbau zu erreichen, ist das Verriegelungselement als Verriegelungskolben ausgebildet. Besonders bevorzugt ist dabei der Verriegelungskolben senkrecht zum Federkolben angeordnet, wobei am Federkolben zwei Durchgangsbohrungen ausgebildet sind, durch welche der Verriegelungskolben hindurchgesteckt ist. Somit ist die Bewegungsrichtung des Verriegelungskolbens senkrecht zur Bewegungsrichtung des Federkolbens. Dies stellt einen besonders kompakten Aufbau bereit.

Am Federkolben ist ein Vorsprung ausgebildet und der Verriegelungskolben weist eine Ausnehmung auf, um den Vorsprung in der zweiten Position, in welcher der Federkolben freigegeben ist, aufzunehmen. Dadurch ist der Federkolben von der Ausgangsposition in die zweite Position bewegbar, wobei gleichzeitig eine Bewegung des Federkolbens nur in einem bestimmten Umfang möglich ist, bis der Vorsprung vollständig in der Ausnehmung angeordnet ist und am Boden der Ausnehmung anschlägt. Dadurch wird eine definierte Bewegung des Federkolbens erreicht. Weiter kann dadurch ein integral gebildeter Anschlag realisiert werden.

Bevorzugt übt das Federelement dabei seine Federkraft auf den Federkolben über den Vorsprung am Federkolben aus. Weiter bevorzugt können auch zwei Vorsprünge an einander gegenüberliegenden Seiten des Federkolbens ausgebildet sein.

Gemäß einer bevorzugten Ausgestaltung der Erfindung erfolgt eine Rückstellung des Federkolbens in seine Ausgangsposition mittels pneumatischer oder hydraulischer Kraft. Besonders bevorzugt wird dabei eine hydraulische Kraft verwendet, welche durch ein in einem Fahrzeug schon vorgesehenes System mit aktivem Druckaufbau, z.B. ein EHB- oder ESP-System o.Ä., bereitgestellt wird. Dadurch kann der Aufwand für die erfindungsgemäße Feststellbremsvorrichtung weiter reduziert werden, da schon auf bereits vorhandene Bauteile bzw. Systeme im Fahrzeug zurückgegriffen werden kann.

Um eine besonders kostengünstige Ausgestaltung des Verriegelungselements zu erreichen, wird der Verriegelungskolben vorzugsweise mittels einer Rückstellfeder in seine Ausgangsposition zurückgebracht.

Die erfindungsgemäße Feststell-Bremsvorrichtung wird vorzugsweise in Fahrzeugen und insbesondere auch in Kombination mit einer Betriebsbremse eines Fahrzeugs verwendet.

### Zeichnung

Nachfolgend wird unter Bezugnahme auf die Zeichnung ein Ausführungsbeispiel der Erfindung im Detail beschrieben. In der Zeichnung ist:
- Figur 1: eine schematische Schnittansicht einer Feststell-Bremsvorrichtung 1 gemäß einem Ausführungsbeispiel der Erfindung, wobei der Eingriffszustand der Feststellbremse dargestellt ist, und
- Figur 2: eine schematische Teilausschnittsansicht der in Figur 1 gezeigten Feststellbremse, wobei die Feststellbremse sich im gelösten Zustand befindet.

### Beschreibung des Ausführungsbeispiels

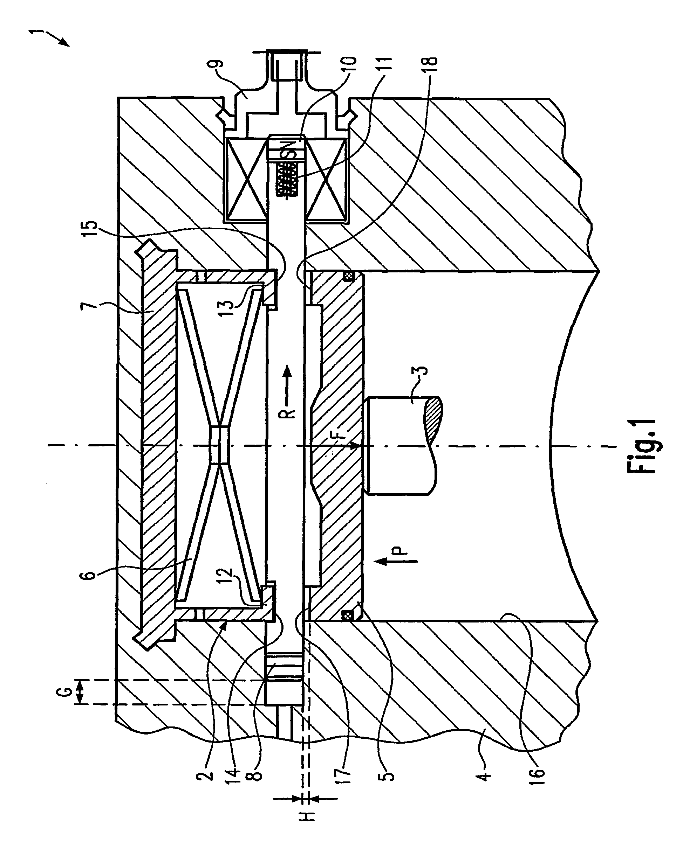

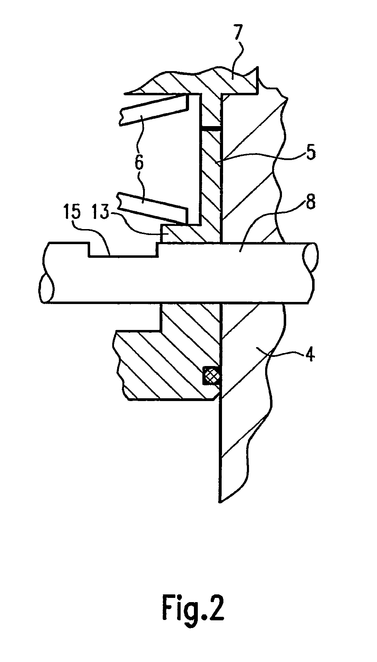

Nachfolgend wird unter Bezugnahme auf die Figuren 1 und 2 eine Feststell-Bremsvorrichtung 1 gemäß einem Ausführungsbeispiel der Erfindung beschrieben.

Wie in Figur 1 gezeigt, umfasst die Feststell-Bremsvorrichtung 1 eine Betätigungseinheit 2 und eine Übertragungseinheit 3. Die Übertragungseinheit 3 steht mit einer nicht gezeigten Feststellbremse in Verbindung und überträgt eine Betätigungskraft F von der Betätigungseinheit 2 auf die Feststellbremse, um eine Feststellbremsfunktion auszuführen. Die Übertragungseinheit 3 kann beispielsweise ein Spindeltrieb o.Ä. sein und einen Nachstellmechanismus umfassen.

Die Betätigungseinheit 2 umfasst ein Federelement 6, einen Federkolben 5 sowie eine Abdeckung 7, an welcher sich das Federelement 6 abstützt. Wie in Figur 1 gezeigt, ist das Federelement 6 als Blattfederelement ausgebildet und stützt sich einerseits an der Abdeckung 7 und andererseits am Federkolben 5 ab. Hierzu ist am inneren hohlen Bereich des Federkolbens 5 ein erster Vorsprung 12 und ein zweiter Vorsprung 13 ausgebildet. Die Vorsprünge liegen einander um 180° gegenüber. Anstelle der beiden Vorsprünge kann auch ein nach innen vorstehender ringförmiger Absatz vorgesehen sein. Das Federelement 6 übt eine ständige Federkraft in Richtung des Pfeils F auf den Federkolben 5 aus. Der Federkolben 5 ist beweglich in einer Zylinderbohrung 16 angeordnet, welche in einem Bremssattel 4 ausgebildet ist.

Ferner umfasst die Feststellbremsvorrichtung 1 als Verriegelungselement einen Verriegelungskolben 8. Der Verriegelungskolben 8 kann mittels eines elektromagnetischen Aktuators in einer Richtung R senkrecht zur Bewegungsrichtung des Federkolbens 5 bewegt werden. Hierzu ist am elektromagnetischen Aktuator 9 ein Permanentmagnet 10 angeordnet. Ferner ist eine Rückstellfeder 11 vorgesehen, um eine Rückstellung des Verriegelungskolbens 8 in seine Ausgangsposition zu ermöglichen.

Im Federkolben 5 sind zwei Durchgangsbohrungen 17 und 18 ausgebildet, welche einander gegenüberliegend angeordnet sind (vergleiche Figur 1). Der Verriegelungskolben 8 ist dabei durch die beiden Durchgangsbohrungen 17, 18 hindurchgeführt, wobei der Durchmesser der Durchgangsbohrungen 17, 18 etwas größer als der Durchmesser des Verriegelungskolbens 8 ist. Dadurch kann der Verriegelungskolben 8 bei entsprechender Stellung des Federkolbens 5 mit Spiel in den Durchgangsbohrungen 17, 18 bewegt werden.

Um eine Verriegelung des Federkolbens 5 durchführen zu können, ist am Verriegelungskolben 8 eine erste Ausnehmung 14 und eine zweite Ausnehmung 15 ausgebildet (vergleiche Figur 1). Die beiden Ausnehmungen 14, 15 liegen am Umfang des Verriegelungskolbens 8 in Richtung der Feder 6.

Nachfolgend wird die Funktionsweise der erfindungsgemäßen Feststellbremsvorrichtung 1 beschrieben. Figur 1 zeigt dabei den Eingriffszustand der Feststellbremse und Figur 2 zeigt schematisch den Nicht-Eingriffszustand der Feststellbremse.

Im Eingriffszustand der Feststellbremse ist der Federkolben 5 durch den Verriegelungskolben 8 freigegeben. Das heißt, wie in Figur 1 gezeigt, dass der Federkolben 5 einen Hub H in Richtung der Federkraft F ausführen kann. Der Hub H wird dabei durch die Tiefe der Ausnehmungen 14, 15 im Verriegelungskolben 8 definiert. Die Tiefe der Ausnehmungen 14, 15 ist dabei etwas größer als der Hub H des Federkolbens. Im dargestellten Ausführungsbeispiel beträgt der Hub ungefähr 1 mm. Über die Übertragungseinheit 3 wird der Hub auf die nicht gezeigte Feststellbremse übertragen und ein Fahrzeug damit gebremst. Wie aus Figur 1 ersichtlich ist, wird der Hub lediglich durch die Federkraft des Federelementes bewirkt, welches gegen die Vorsprünge 12, 13 drückt. Der Hub H des Federkolbens 5 kann auch im Bereich zwischen der Abdeckung 7 und dem nach oben gerichteten Ende des Hubkolbens 5 in Figur 1 entnommen werden.

Im Eingriffszustand der Feststellbremse hat der Verriegelungskolben 8 ebenfalls einen Hub G ausgehend von seiner Ausgangsposition ausgeführt, um den Federkolben 5 freizugeben. Der Hub G des Verriegelungskolbens 8 wird durch eine Bestromung des elektromagnetischen Aktuators ermöglicht, wobei in der in Figur 1 gezeigten Position die Rückstellfeder 11 sich im gespannten Zustand befindet. Dadurch kann die Rückstellfeder 11 für eine Rückstellung des Verriegelungskolbens 8 verwendet werden, wenn die Feststellbremse freigegeben werden soll. Der Hub G des Verriegelungskolbens 8 entspricht dabei ungefähr einer Länge der Ausnehmungen 14, 15 in der Bewegungsrichtung R des Verriegelungskolbens.

Wenn somit die Feststellbremse aktiviert wird, kann beispielsweise über ein im Fahrzeug vorhandenes ESP-System Druck aufgebaut werden und der Verriegelungskolben 8 entlastet werden. Dadurch kann dieser nun kraftlos durch den elektromagnetischen Aktuator 9 in Richtung des Permanentmagneten 10 bewegt werden. Der Permanentmagnet 10 hält den Verriegelungskolben 8 nun in dieser Position. Die Entlastung des Verriegelungskolbens 8 erfolgt dabei durch eine Druckkraft P, welche auf die Unterseite des Federkolbens 5 wirkt, so dass der Verriegelungskolben 8 möglichst reibungsfrei bewegt werden kann. Wenn somit der Verriegelungskolben 8 in der in Figur 1 gezeigten zweiten Position angeordnet ist, wird der Druck P über das ESP-System abgebaut, so dass ausschließlich die Federkraft F den Federkolben 5 in Richtung des Pfeils F bewegen kann, so dass der Federkolben 5 den Hub H ausführt.

Wenn nun die Feststellbremse gelöst werden soll, wird wieder ein Druck P über das ESP-System aufgebaut, so dass der Federkolben 5 entgegen der Federkraft F des Federelements 6 in seine Ausgangsposition gebracht wird. Dadurch wird der Hub H wieder rückgängig gemacht, wobei die Abdeckung 7 als Anschlag für den Federkolben 5 dienen kann. Nun kann durch Umpolen des elektromagnetischen Aktuators 9 der Permanentmagnet 10 geschwächt werden, so dass eine automatische Rückstellung des Verriegelungskolbens 8 durch die gespannte Rückstellfeder 11 erfolgen kann. Dadurch wird der Federkolben 5 verriegelt. Diese verriegelte Position des Federkolbens 5 ist in Figur 2 dargestellt. Dabei liegen die Vorsprünge 12, 13 auf dem Außenumfang des Verriegelungskolbens 8 auf. Eine Länge der Vorsprünge 12, 13 in Richtung der Mitte des Federkolbens 15 entspricht bei ungefähr dem Hub G des Verriegelungskolbens 8 zurück in seine Ausgangsposition (vergleiche Figur 1).

Nachdem der Verriegelungskolben 8 wieder in seine Ausgangsposition zurückgestellt wurde, kann der hydraulische Druck P wieder abgebaut werden und die Feststellbremse ist gelöst.

Die erfindungsgemäße Feststellbremsvorrichtung 1 wird besonders bevorzugt in Kombination mit einer normalen Betriebsbremse eines Fahrzeugs verwendet. Dabei ist bei einer normalen Betriebsbremsung der Federkolben 5 durch den Verriegelungskolben 2 in seiner Grundposition (Figur 2) gehalten.

Somit kann erfindungsgemäß eine Feststellbremsenfunktion über das Federelement 6 realisiert werden. Dadurch kann eine Betätigung der Feststellbremse des Fahrzeugs lediglich mittels Federkraft F realisiert werden. Somit ergibt sich erfindungsgemäß ein einfacher und robuster Aufbau, welcher eine hohe Betriebssicherheit für die Feststellbremse garantieren kann. Weiterhin kann eine kostengünstige Herstellbarkeit realisiert werden. Im Vergleich mit den bekannten Betätigungseinheiten, wie z.B. Seilzug, Elektromotor, hydraulische automatische Parkbremse usw., können deutliche Kostenvorteile verwirklicht werden, insbesondere, wenn ein schon vorhandenes ESP-System für einen Aufbau eines Gegendrucks P gegen den Federkolben 5 verwendet wird.

## Patentansprüche

1. Feststell-Bremsvorrichtung, umfassend
eine Betätigungseinheit (2) und eine Übertragungseinheit (3) zur Übertragung einer Betätigungskraft (F) auf eine Bremseinrichtung,
wobei ein Federelement (6) die Betätigungskraft (F) zum Feststellen der Bremseinrichtung aufbringt und
ein Verriegelungselement (8), das mittels eines elektrischen oder elektromagnetischen Aktuators (9) zwischen einer ersten Position und einer zweiten Position verstellbar ist,
**dadurch gekennzeichnet,**
**dass** zwischen dem Federelement (6) und der Übertragungseinheit (3) ein Federkolben (5) angeordnet ist, wobei die Federkraft (F) des Federelements (6) über den Federkolben (5) auf die Übertragungseinheit (3) wirkt,
**dass** das Verriegelungselement ein Verriegelungskolben (8) ist, der senkrecht zum Federkolben (5) angeordnet ist,
**dass** am Federkolben (5) zwei Durchgangsbohrungen (17, 18) angeordnet sind, durch welche der Verriegelungskolben (8) hindurchgeführt ist und
**dass** der Federkolben (5) einen Vorsprung (12, 13) aufweist und der Verriegelungskolben (8) eine Ausnehmung (14, 15) aufweist, um den Vorsprung (12, 13) in der zweiten Position des Verriegelungskolbens (8) aufzunehmen.

2. Feststell-Bremsvorrichtung nach Anspruch 1, **dadurch gekennzeichnet, dass** das Federelement (6) seine Federkraft (F) auf den Federkolben (5) über den Vorsprung (12, 13) am Federkolben ausübt.

3. Feststell-Bremsvorrichtung nach einem der Ansprüche 1 oder 2, **dadurch gekennzeichnet, dass** eine Rückstellung des Federkolbens (5) in seine Ausgangsposition mittels pneumatischer oder hydraulischer Kraft (P) erfolgt.

4. Feststell-Bremsvorrichtung nach Anspruch 3, **dadurch gekennzeichnet, dass** die Kraft zur Rückstellung des Federkolbens mittels eines Bremssystems mit aktivem Druckaufbau bereitgestellt wird.

5. Feststell-Bremsvorrichtung nach einem der Ansprüche 1 bis 4, **dadurch gekennzeichnet, dass** der Verriegelungskolben (8) mittels einer Rückstellfeder (11) in seine Ausgangsposition rückstellbar ist.

6. Fahrzeug, umfassend eine Feststell-Bremsvorrichtung gemäß einem der vorhergehenden Ansprüche.

## Claims

1. Parking brake device, comprising
an activation unit (2) and a transmission unit (3) for transmitting an activation force (F) to a brake device, wherein a spring element (6) provides the activation force (F) for applying the brake device, and
a locking element (8) which can be adjusted between a first position and a second position by means of an electrical or electromagnetic actuator (9),
**characterized in that** a spring piston (5) is arranged between the spring element (6) and the transmission unit (3), wherein the spring force (F) of the spring element (6) acts on the transmission unit (3) via the spring piston (5), **in that** the locking element is a locking piston (8) which is arranged perpendicularly with respect to the spring piston (5), **in that** two through-bores (17, 18) through which the locking piston (8) is made to extend are arranged on the spring piston (5), and **in that** the spring piston (5) has a projection (12, 13) and the locking piston (8) has a recess (14, 15) in order to hold the projection (12, 13) in the second position of the locking piston (8).

2. Parking brake device according to Claim 1, **characterized in that** the spring element (6) exerts its spring force (F) on the spring piston (5) via the projection (12, 13) on the spring piston.

3. Parking brake device according to one of Claims 1 or 2, **characterized in that** the spring piston (5) is reset into its home position by means of pneumatic or hydraulic force (P).

4. Parking brake device according to Claim 3, **characterized in that** the force for resetting the spring piston is made available by means of a brake system with an active pressure build-up.

5. Parking brake device according to one of Claims 1 to 4, **characterized in that** the locking piston (8) can be reset to its home position by means of a resetting spring (11).

6. Vehicle comprising a parking brake device according to one of the preceding claims.

## Revendications

1. Dispositif de frein de stationnement comprenant une unité d'actionnement (2) et une unité de transmission (3) pour transmettre une force d'actionnement (F) à une installation de frein,
un élément de ressort (6) appliquant la force d'actionnement (F) pour bloquer l'installation de frein et
un élément de verrouillage (8) réglable entre une première position et une seconde position par un actionneur (9) électrique ou électromagnétique,
**caractérisé en ce qu'**
un piston à ressort (5) est prévu entre l'élément de ressort (6) et l'unité de transmission (3),
la force d'actionnement (F) de l'élément de ressort (6) agit par l'intermédiaire du piston à ressort (5) sur l'unité de transmission (3),
l'élément de verrouillage est un piston de verrouillage (8) perpendiculaire au piston à ressort (5),
le piston à ressort (5) comporte deux perçages traversants (17, 18) par lesquels passe le piston de verrouillage (8) et
le piston à ressort (5) comporte une partie en saillie (12, 13) et le piston de verrouillage (8) comporte une cavité (14, 15) pour recevoir la partie en saillie (12, 13) dans la seconde position du piston de verrouillage (8).

2. Dispositif de frein de stationnement selon la revendication 1,
**caractérisé en ce que**
l'élément de ressort (6) exerce sa force (F) sur le piston à ressort (5) par l'intermédiaire de la partie en saillie (12, 13) du piston à ressort.

3. Dispositif de frein de stationnement selon l'une des revendications 1 ou 2,
**caractérisé par**
le rappel du piston à ressort (5) dans sa position de repos par une force pneumatique ou hydraulique (P).

4. Dispositif de frein de stationnement selon la revendication 3,
**caractérisé en ce que**
la force de rappel du piston à ressort est fournie par un système de frein à pression active.

5. Dispositif de frein de stationnement selon l'une des revendications 1 à 4,
**caractérisé en ce que**
le piston de verrouillage (8) est rappelé en position de repos par un ressort de rappel.

6. Véhicule comportant un dispositif de frein de stationnement selon l'une des revendications précédentes.
